# EUROPEAN PATENT SPECIFICATION

(11) **EP 2 434 227 B1**
(45) Date of publication and mention of the grant of the patent: **01.02.2017**
(21) Application number: 11182647.5
(22) Date of filing: 23.09.2011
(51) Int. Cl.: F24H 1/43, F24H 9/00, F24H 8/00

(54) **Condensing heat exchanger for a gas boiler**
Kondensationswärmetauscher für einen Gasboiler
Échangeur de chaleur à condensation pour chaudière à gaz

(30) Priority: 23.09.2010 IT MI20101729
(43) Date of publication of application: 28.03.2012
(73) Proprietor: Riello S.p.A., Legnago (IT)
(72) Inventor: Casiraghi, Stefano, 23875 Osnago (IT)
(74) Representative: Bergadano, Mirko

(56) References cited:
- EP-A1- 1 600 708
- WO-A1-2011/128764
- US-A- 6 109 339
- US-A- 6 152 086

## Description

The present invention relates to a condensing heat exchanger for a gas boiler.

In particular, the condensing heat exchanger comprises a casing for conducting combustion fumes; a hollow elongated member for conducting a liquid and coiled about an axis so as to form a helix housed inside the casing and including a number of adjacent turns separated by a helical gap. Defined inside the helix is a feed region for combustion fumes, which flow in the helical gap.

The exchanger of the above-identified type is configured to define a path for the combustion fumes, which extends between the adjacent turns so as to achieve heat exchange between the combustion fumes and the liquid. In practice, the combustion fumes cross the gap between the adjacent turns in radial direction.

Condensing heat exchangers of the above-identified type are known and are configured to be mounted in gas boilers. In particular, documents EP 1.627.190 B1; EP 1.600.708 A1; EP 1.750.070 A1; EP 1.750.069 A1; EP 1.752.718 A1 show significant examples of condensing heat exchangers mounted in gas boilers.

In the above-identified exchangers of known type, it is known to arrange a deflecting member in the helix and the output of the combustion fumes from the casing in respective positions such as to define a path of the fumes providing two radial crossings of the gap. Indeed, the crossing of the gap by the combustion fumes is the step in which the greatest heat transfer occurs from the combustion fumes to the liquid.

The gap is sized so as to optimize the efficiency of the heat exchanger, however the entry in the exchanger of possible soot or other impurities which may come in contact with the elongated member could induce a rapid deterioration of the heat exchanger performances. Moreover, such impurities may be mixed with the condensation and form fouling along the hollow elongated member. It is apparent that such fouling is difficult to remove.

From US 6,152,086 it is known a heat exchanger comprising a helical pipe, an outer jacket, and an intermediate jacket of cylindrical form and provided with a plurality of openings arranged in accordance to the pitch of the helical pipe. The exhaust gases flow through the openings in the space between the outer and intermediate jacket. The document reveals of the features of the preamble of claim 1.

One object of the present invention is to make a condensing heat exchanger which has a relatively constant heat exchange capacity and efficiency over time.

A further object of the present invention is to make a condensing heat exchanger which, in addition to offering increased efficiencies, is simple to make and assemble.

A condensing heat exchanger for a gas boiler is made according to the present invention, in which the condensing heat exchanger comprises a casing for conducting combustion fumes; a hollow elongated member shaped to conduct a liquid, and which is coiled about an axis to form a helix, which is housed inside the casing and comprises a number of adjacent turns and a helical gap; and a first feeding region for combustion fumes into the helix. The casing comprises a first wall extending about the axis and the helix and equipped with one first outlet for the combustion fumes; and a second wall extending about the first wall and spaced apart from the first wall to form an annular gap between the first wall and the second wall, which comprises one second outlet offset with respect to the first outlet.

Due to the present invention, the soot or other impurity which may fall from the chimney cannot enter the heat exchange zone and come in contact with the hollow elongated member.

According to a preferred embodiment of the present invention, the turns, the first wall, the first outlet, and the first combustion fume feed region are arranged so as to direct the combustion fumes along a helical path extending along the hollow elongated member.

Thereby, the combustion fumes are kept in contact with the hollow elongated member for a very long time. This fact determines an improved heat exchange and increased efficiency of the exchanger. Moreover, there is no need for a deflecting member of the fume path, resulting in a construction simplification of the heat exchanger.

Further advantages of the present invention will become more apparent from the following description of non-limiting embodiments thereof, with reference to the figures of the accompanying drawings, in which:
- figure 1 is a longitudinal sectional view, with parts removed for clarity, of a gas boiler equipped with the condensing heat exchanger object of the present invention;
- figure 2 is a side elevation view, on enlarged scale, with parts in section and parts removed for clarity, of a peculiarity of the gas boiler in figure 1;
- figure 3 is a longitudinal sectional view, with parts removed for clarity, of an alternative embodiment of the gas boiler in figure 1; and
- figure 4 is a side elevation view, with parts in section and parts removed for clarity, of a further embodiment of the gas boiler object of the present invention.

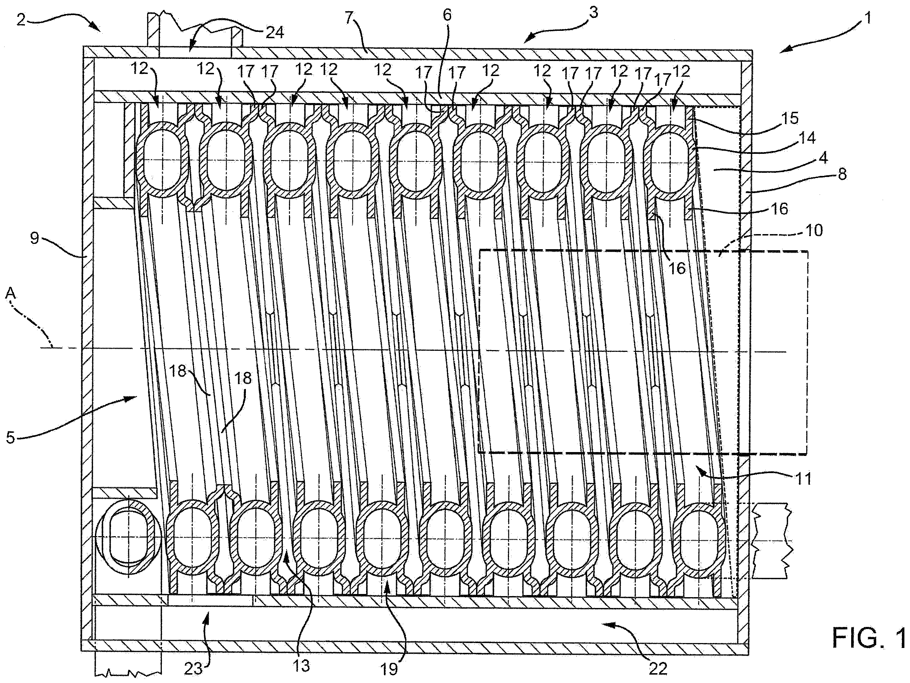

Numeral 1 in figure 1 indicates a gas boiler as a whole, for producing hot water heated by the combustion fumes. The gas boiler 1 comprises a condensing heat exchanger 2, which comprises a cylindrical-shaped casing 3 and a hollow elongated member 4 coiled about an axis A so as to form a helix 5, which is housed in casing 3. Casing 3 is configured to be crossed by combustion fumes, while the hollow elongated member 4 is configured to be crossed by at least one liquid, in the case disclosed, water.

Casing 3 comprises a wall 6 made with metal material, preferably aluminium, and extending about helix 5; a wall 7 extending about wall 6; and two end walls 8 and 9 coupled with walls 6 and 7. In the case disclosed, the end wall 8 is associated with a burner 10, which, in use, is arranged inside helix 5 in a combustion fume generating region 11. In the case shown, burner 10 has one shape, but other types of burners may also be implemented, e.g. spherical-cap shaped.

The hollow elongated member 4 comprises two end connections (not shown in the accompanying figures) for connecting to the hollow elongated member 4 at the remaining part of the water circuit (not shown in the accompanying figures). The hollow elongated member 4 is substantially shaped by a metal section bar defining one or more inner conduits crossed by one or more liquids. One of the inner conduits is possibly equipped with an inner coating.

The diameters of helix 5 and of wall 6 are such as to arrange the hollow elongated element 4 in contact with wall 6 and as to prevent a flow of combustion fumes parallel to axis A and outside helix 5. Helix 5 comprises a number of turns 12, which are spaced apart from each other so as to form a helical gap 13 for allowing the combustion fumes to transit along gap 13. The dimensions of helical gap 13 measured along axis A are important parameters for determining an efficient heat exchange. Accordingly, the dimensions of the helical gap 13 measured along axis A are determined initially according to the geometry of the heat exchanger 2, the power of burner 10 so as to optimize heat exchange.

The hollow elongated member 4, or better the metal section bar from which the hollow elongated member 4 is obtained, is made of aluminium or aluminium alloy and by means of an extrusion process. The hollow elongated member 4 preferably comprises one tube 14 and four fins 15, 16, which are parallel to tube 14 and co-extruded with tube 14. More generally, the preferable number of fins is between two and six. Tube 14 preferably has an elliptical or oval-shaped cross section, and has a larger axis X and a smaller axis Y. The fins 15, 16 are divided into two groups of two fins each. The two groups are arranged on opposite sides of axis Y. In other words, with reference to helix 5, two fins 16 are facing outwards of helix 5, while two fins 16 are facing inwards of helix 5.

The material and the thickness of the walls of the tube 14 and of the fins 15 and 16 are selected so as to give rigidity to the hollow elongated member 4 and self support to helix 5.

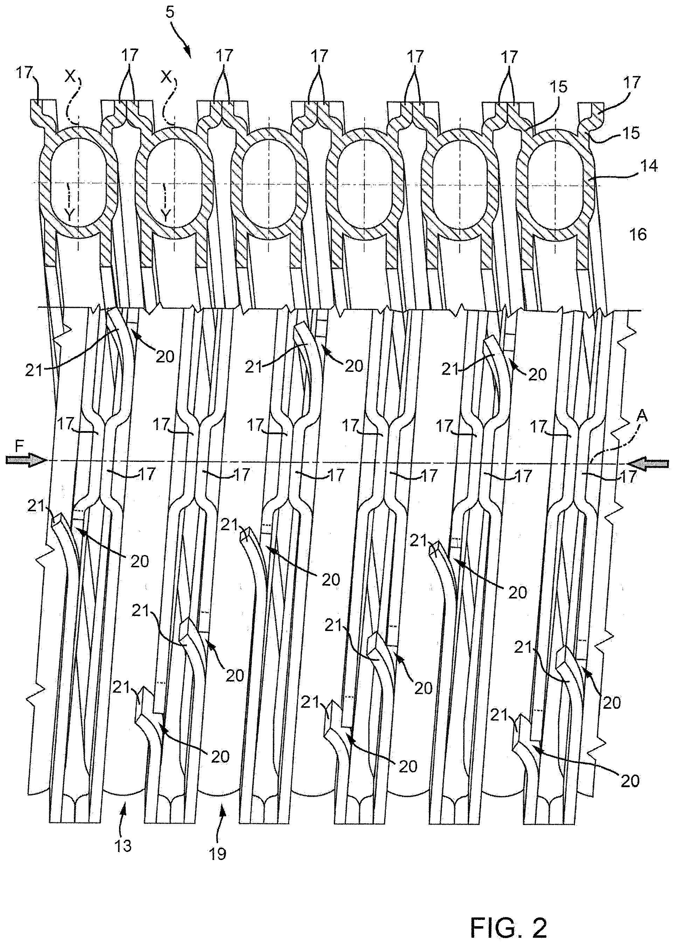

A straight hollow elongated member 4 is obtained by means of the extrusion process, which is then coiled about axis A while substantially keeping the smaller axis Y parallel to axis A so as to form helix 5 (figure 2).

The facing fins 15 are locally and plastically deformed to form lips 17 which are in reciprocal contact and serve the function of separators for forming the helical gap 13 between the adjacent turns 12. The lips 17 are preferably obtained at regular intervals, for example 90° about axis A of helix 5. The lips 17 of the fins 15 are kept in reciprocal contact by a preloading force F determined by the helix-coiled hollow elongated member 4. To make helix 5, the hollow elongated member 4 with straight configuration (not shown in the accompanying figures) is coiled about axis A with a winding pitch of the helix such that the adjacent turns 12 are arranged in reciprocal contact or at a distance smaller than the dimensions of the helical gap 13, that is the project dimensions of the helical gap 13. By means the deformation of the lips 17, the adjacent turns 12 are spaced by an entity proportionate to the dimensions of the lips 17 thus generating the precompression force F.

According to a variant not shown, the helical gap between the adjacent turns 12 varies along helix 5. In practice, the lips 17 have reciprocally different dimensions.

The facing fins 16 are deformed to shape a number of lips 18 arranged in reciprocal contact along at least one section of helix 5 at two adjacent turns 12.

The fins 15 in contact with the first wall 6 define a helical compartment 19 comprised between tube 14, the fins 15 and wall 6. In fact, the helical compartment 19 is parallel and adjacent to the helical gap 13.

With reference to figure 2, the fins 15 have some openings 20, through which the combustion fumes may flow. Each opening 20 is formed by one cut and deformed portion 21 of fin 15. The openings 20 allow a fluidic communication to be obtained between the helical gap 13 and the helical compartment 19. Thereby, the combustion fumes may transit along the helical gap 13 and the helical compartment 19, and transit from gap 13 to compartment 19 and vice versa through the openings 20. The openings 20 also serve the function of giving accelerations, deviations and decelerations to the combustion fume flow and contribute to increasing the turbulent motion of the combustion fumes.

With reference to figure 1, wall 6 comprises an outlet 23 of the combustion fumes arranged close to the end wall 9. Outlet 23 is arranged between the two adjacent turns 12 which fins 16 are arranged in contact along the lips 18 so as to prevent the direct exit of combustion fumes from outlet 23.

Wall 7 is spaced with respect to the first wall 6, so as to form an annular gap 22 between wall 6 and wall 7. Wall 7 comprises an outlet 24 offset with respect to outlet 23. In practice, outlet 24 is arranged at the part diametrically opposite to outlet 23 with respect to axis A.

In use, the combustion fumes generated by burner 10 occupy the helical gap 13 and penetrate the helical compartment 19 by transiting through the openings 20. The entity of the penetration of the fumes into compartment 19 depends on the dimensions of the helical gap 13, the dimensions and the shape of the openings 20, and the extension of the lips 18.

Any progressive decrease in the axial dimension of gap 13 is useful for balancing the flows and the overall heat exchange of exchanger 2.

Once the combustion fumes have left outlet 23, they occupy the annular gap 22 and completely envelope wall 6.

In fact, the flow of combustion fumes significantly slows down in the annular gap 22, both due to the increased available volume and to the decreased volume of combustion fumes attributable to the cooling thereof. The cooling and the decreasing of speed of the combustion fumes promote condensation and combustion residues to be deposited on the bottom of wall 7, from which they are evacuated by means of a trap (not shown in the accompanying figures). Moreover, the soot cannot get into the heat exchange zone and come in contact with the hollow elongated member 4.

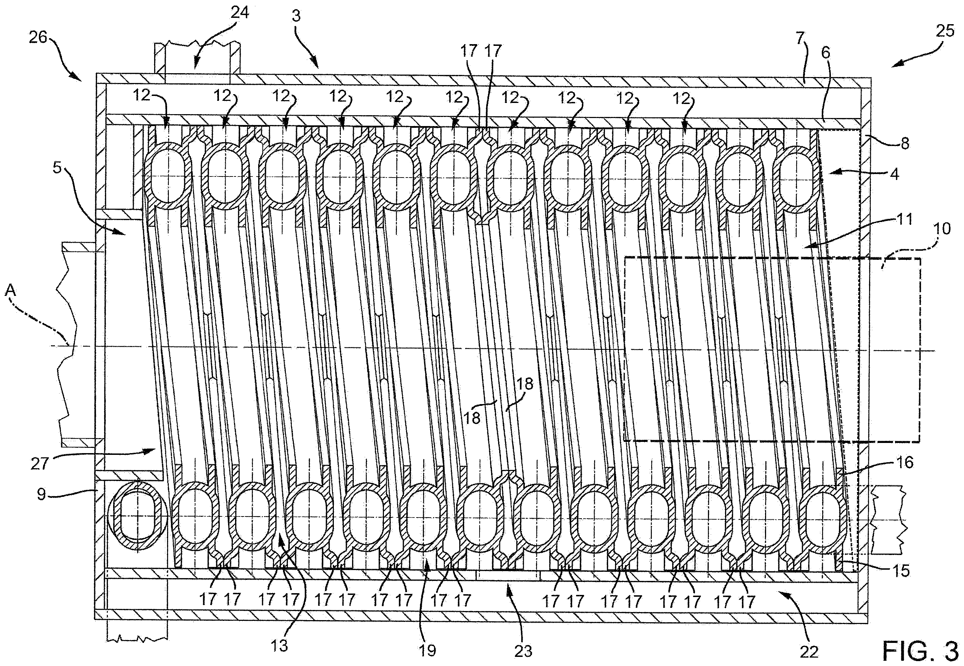

Numeral 25 in figure 3 indicates a gas boiler of the condensing type in which the parts similar to the condensing boiler 1 in figure 1 are indicated with the same reference number.

Boiler 25 comprises a condensing heat exchanger 26, which length along axis A is greater than the length of exchanger 2. Essentially, exchanger 26 of the gas boiler 25 comprises two separate combustion fume feed regions 11 and 27, in the case disclosed, burner 10 and a high heat content fluid input zone on the end wall 9. This heat source comes from the coupling between the heat exchanger 26 and an endothermic or exothermic motor, which generally serves the purpose of generating electric energy. Generally, these motors have an efficiency between 10% and 35%. Rather than being dissipated into the ambient, the thermal energy of the combustion products is recovered by the heat exchanger 26. Outlet 23 of wall 6 is arranged in an intermediate position between fume feed regions 11 and 27. The facing fins 15 of the adjacent turns 12 are deformed at a section of helix 5 at outlet 23 so as to prevent the direct escape of the combustion fumes.

In terms of operation, the combustion fumes are generated in the two opposite regions 10 and 26 and travel the helical compartment 19 and the helical gap 13 in two opposite and converging directions towards outlet 23.

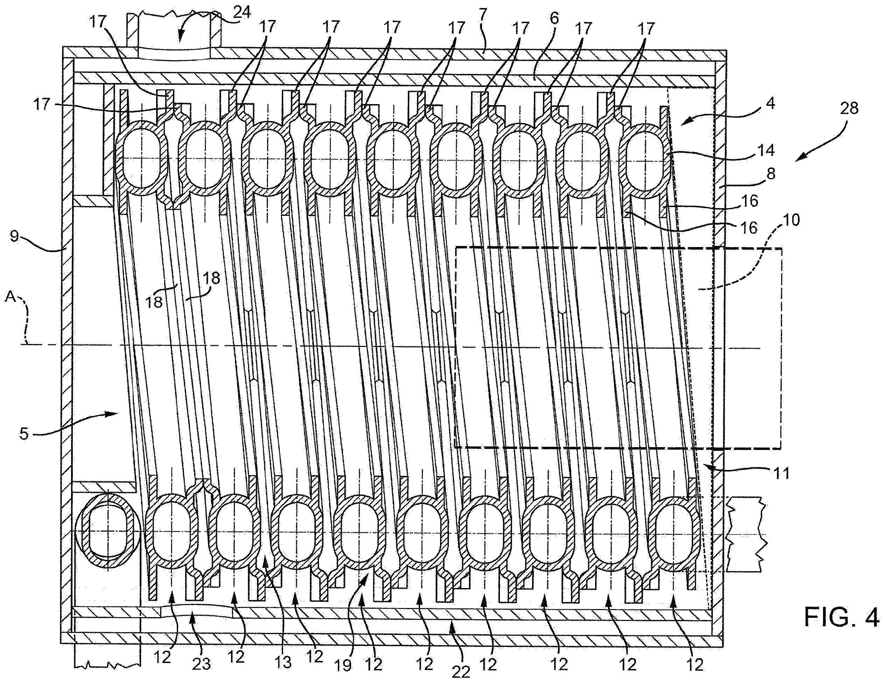

With reference to the embodiment in figure 4, numeral 28 indicates a gas boiler of the condensing type in which the parts similar to the condensing boiler 1 in figure 1 are indicated with the same reference number. The gas boiler 28 comprises a condensing heat exchanger 29, which differs from the heat exchanger 2 in that helix 5 is not arranged in contact with wall 6, and in that the hollow elongated member 4 comprises two outer fins 30 and 31, where fin 31 has a higher height (in radial direction with respect to axis A) than the height of fin 30.

Although the free end of fin 31 is not in contact with wall 6, it is arranged close to wall 6 so as to form the helical compartment 19 between two fins 31 adjacent to tube 14 and wall 6.

There are many advantages of the present invention and they can be identified in a relatively constant increased level of heat exchange over time associated with significant construction simplicity. Moreover, the condensing heat exchanger comprises few elements which are to be assembled with each other. Another advantage of the present invention consists in the ease of cleaning the annular gap between the two cylindrical walls.

Lastly, it is apparent that modifications, variants and improvements may be made to the condensing heat exchanger described without departing from the scope of the appended claims.

## Claims

1. A condensing heat exchanger for a gas boiler, the heat exchanger (2) comprising a casing (3) for conducting combustion fumes; a hollow elongated member (4) for conducting a liquid, and which is coiled about an axis (A) to form a helix (5) housed inside the casing (3) and comprising a number of adjacent turns (12) and a helical gap (13); and a first combustion fume feed region (11) for feeding combustion fumes into the helix (5); the casing (3) comprising a first wall (6) extending about the axis (A) and the helix (5) ;
and a second wall (7) extending about the first wall (6) and spaced apart from the first wall (6) to form an annular gap (22) between the first wall (6) and the second wall (7), **characterized in that** the first wall comprises a single first outlet (23) for the combustion fumes, and the second wall comprises a single second outlet (24) offset with respect to the first outlet (23).

2. A heat exchanger as claimed in Claim 1, wherein the turns (12), the first wall (6), the first outlet (23), and the first combustion fume feed region (11) are so arranged as to direct the combustion fumes along a helical path extending along the hollow elongated member (4).

3. A heat exchanger as claimed in Claim 1, wherein the first wall (6) is located close to the turns (12) along the helix (5).

4. A heat exchanger as claimed in Claim 3, wherein the hollow elongated member (4) comprises a tube (14), and two facing longitudinal first fins (15; 30, 31); and at least one of the first fins (15; 31) is located close to the first wall (6) along the helix (5).

5. A heat exchanger as claimed in Claim 4, wherein the first fins (15; 30, 31) are positioned to define a helical compartment (19) between the tube (14), the two first fins (15), and the first wall (6).

6. A heat exchanger as claimed in Claim 5, wherein each first fin (15; 30, 31) is deformed locally to contact the other first fin (15; 31, 30) and define a space between the adjacent turns (12).

7. A heat exchanger as claimed in any one of Claims 4 to 6, wherein the first fins (15) have combustion fume flow openings (20).

8. A heat exchanger as claimed in Claim 7, wherein each opening (20) is formed by a cut and deformed portion (21) of a first fin (15).

9. A heat exchanger as claimed in one of Claims 4 to 8, wherein the height, measured radially with respect to the axis (A), of one of the first fins (31) is greater than the height of the other first fin (30).

10. A heat exchanger as claimed in any one of Claims 4 to 9, wherein the hollow elongated member (4) comprises two facing longitudinal second fins (16) facing inwards of the helix (5).

11. A heat exchanger as claimed in Claim 10, wherein the second fins (16) are positioned contacting one another along at least two adjacent turns (12) on opposite sides of the first outlet (23).

12. A heat exchanger as claimed in any one of the foregoing Claims, wherein the casing (3) comprises a first end wall (8) and a second end wall (9); the first combustion fume feed region (11) being located close to the first end wall (8); and the first end wall (8) preferably supporting a gas burner (10) housed inside the helix (5) and defining the first combustion fume feed region (11).

13. A heat exchanger as claimed in Claim 12, wherein the first outlet (23) is located close to the second end wall (9).

14. A heat exchanger as claimed in Claim 13, and comprising a second combustion fume feed region (26) located close to the second end wall (9); the first outlet (23) being located between the first and second combustion fume feed region (11, 26).

## Patentansprüche

1. Ein Kondensationswärmetauscher für einen Gasboiler, wobei der Wärmetauscher (2) weist: ein Gehäuse (3) zum Führen von Brenngasen; ein hohles langgestrecktes Teil (4) zum Zuführen einer Flüssigkeit, das um eine Achse (A) gewunden ist, um eine Helix (5) zu bilden, die innerhalb des Gehäuses (3) angeordnet ist und eine Anzahl von nebeneinander liegenden Windungen (12) und einen spiralförmigen Spalt (13) aufweist; und einen ersten Brenngasführungsabschnitt (11) zum Führen von Brenngasen in die Helix (5); wobei das Gehäuse (3) eine erste Wand (6), die sich um die Achse (A) und die Helix (5) erstreckt, und eine zweite Wand (7) aufweist, die sich um die erste Wand (6) erstreckt und zur Bildung eines Spaltes (22) zwischen der ersten Wand (6) und der zweiten Wand (7) im Abstand zu der ersten Wand (6) angeordnet ist,
**dadurch gekennzeichnet, dass** die erste Wand einen einzigen ersten Auslass (23) für die Brenngase aufweist und die zweite Wand einen einzigen zweiten Auslass (24), der in Bezug auf den ersten Auslass (23) versetzt angeordnet ist, aufweist.

2. Ein Wärmetauscher wie in Anspruch 1 beansprucht, wobei die Windungen (12), die erste Wand (6), der erste Auslass (23) und der erste Brenngasführungsabschnitt (11) derart angeordnet sind, dass die Brenngase entlang eines spiralförmigen Pfades geführt werden, der sich entlang des hohlen langgestreckten Teils (4) erstreckt.

3. Ein Wärmetauscher wie in Anspruch 1 beansprucht, wobei die erste Wand (6) nahe der Windungen (12) entlang der Helix (5) angeordnet sind.

4. Ein Wärmetauscher wie in Anspruch 3 beansprucht, wobei das hohle langgestreckte Teil (4) ein Rohr (14) und zwei gegenüberliegende erste Rippen (15; 30, 31) aufweist; und wenigstens eine der ersten Rippen (15; 31) nahe der ersten Wand (6) entlang der Helix (5) angeordnet ist.

5. Ein Wärmetauscher wie in Anspruch 4 beansprucht, wobei die ersten Rippen (15; 30, 31) derart angeordnet sind, dass sie zwischen dem Rohr (14), den beiden ersten Rippen (15) und der ersten Wand (6) ein spiralförmiges Kampartiment (19) bilden.

6. Ein Wärmetauscher wie in Anspruch 5 beansprucht, wobei jede erste Rippe (15; 31, 30) lokal deformiert ist, umdie andere erste Rippe (15; 31, 30) zu kontaktieren und einen Raum zwischen den benachbarten Windungen (12) zu bilden.

7. Ein Wärmetauscher wie in einem der Ansprüche 4 bis 6 beansprucht, wobei die ersten Rippen (15) Brenngasdurchflussöffnungen (20) haben.

8. Ein Wärmetauscher wie in Anspruch 7 beansprucht, wobei jede Öffnung (20) durch einen eingeschnittenen und deformierten Abschnitt (21) der ersten Rippe (15) gebildet ist.

9. Ein Wärmetauscher wie in einem der Ansprüche 4 bis 8 beansprucht, wobei die Höhe einer der ersten Rippen (31), die radial in Bezug auf die Achse (A) gemessen wird, größer als die Höhe der anderen ersten Rippe (30) ist.

10. Ein Wärmetauscher wie in einem der Ansprüche 4 bis 9 beansprucht, wobei das hohle langgestreckte Teil (4) zwei gegenüberliegende zweite Rippen (16) aufweist, die von der Helix (5) nach innen gewandt sind.

11. Ein Wärmetauscher wie in Anspruch 10 beansprucht, wobei die zweiten Rippen (16) derart angeordnet sind, dass sie miteinander entlang wenigstens zwei Windungen (12) auf einander gegenüberliegenden Seiten des ersten Auslasses (23) kontaktieren.

12. Ein Wärmetauscher wie in einem der vorhergehenden Ansprüche beansprucht, wobei das Gehäuse eine erste Stirnwand (8) und eine zweite Stirnwand (9) aufweist; wobei der erste Brenngasführungsabschnitt (11) nahe der ersten Stirnwand (8) angeordnet ist; und die erste Stirnwand (8) vorzugsweise einen innerhalb der Helix (5) untergebrachten Gasbrenner (10) trägt und den ersten Brenngasführungsabschnitt (11) bildet.

13. Ein Wärmetauscher wie in Anspruch 12 beansprucht, wobei der erste Auslass (23) nahe der zweiten Stirnwand (9) angeordnet ist.

14. Ein Wärmetauscher wie in Anspruch 13 beansprucht, und aufweisend einen zweiten Brenngasführungsabschnitt (26), der nahe der zweiten Stirnwand (9) angeordnet ist; wobei der erste Auslass (23) zwischen dem ersten und zweiten Brenngasführungsabschnitt (11, 26) angeordnet ist.

## Revendications

1. Echangeur thermique à condensation pour chaudière à gaz, l'échangeur thermique (2) comprenant un carter (3) pour faire cheminer des émanations de combustion ; un élément allongé creux (4) pour faire cheminer un liquide, et lequel est bobiné autour d'un axe (A) de manière à former une hélice (5) logée à l'intérieur du carter (3) et comprenant un certain nombre de spires adjacentes (12) et un entrefer hélicoïdal (13) ; et une première région d'alimentation en émanations de combustion (11) pour alimenter des émanations de combustion à l'intérieur de l'hélice(5) ; le carter (3) comprenant une première paroi (6) qui s'étend autour de l'axe (A) et de l'hélice (5) ; et une seconde paroi (7) qui s'étend autour de la première paroi (6) et qui est espacée de la première paroi (6) de manière à former un espace annulaire (22) entre la première paroi (6) et la seconde paroi (7), **caractérisé en ce que** la première paroi comprend une unique première sortie (23) pour les émanations de combustion, et la seconde paroi comprend une unique seconde sortie (24) qui est décalée par rapport à la première sortie (23).

2. Echangeur thermique selon la revendication 1, dans lequel les spires (12), la première paroi (6), la première sortie (23) et la première région d'alimentation en émanations de combustion (11) sont agencées de manière à diriger les émanations de combustion suivant une trajectoire hélicoïdale qui s'étend le long de l'élément allongé creux (4).

3. Echangeur thermique selon la revendication 1, dans lequel la première paroi (6) est située à proximité des spires (12) le long de l'hélice (5).

4. Echangeur thermique selon la revendication 3, dans lequel l'élément allongé creux (4) comprend un tube (14) et deux premières ailettes longitudinales se faisant face (15 ; 30, 31) ; et au moins l'une des premières ailettes (15 ; 31) est située à proximité de la première paroi (6) le long de l'hélice (5).

5. Echangeur thermique selon la revendication 4, dans lequel les premières ailettes (15 ; 30, 31) sont positionnées de manière à définir un compartiment hélicoïdal (19) entre le tube (14), les deux premières ailettes (15) et la première paroi (6).

6. Echangeur thermique selon la revendication 5, dans lequel chaque première ailette (15 ; 30, 31) est déformée localement de manière à entrer en contact avec l'autre première ailette (15 ; 31, 30) et de manière à définir un espace entre les spires adjacentes (12).

7. Echangeur thermique selon l'une quelconque des revendications 4 à 6, dans lequel les premières ailettes (15) comportent des ouvertures de circulation d'émanations de combustion (20).

8. Echangeur thermique selon la revendication 7, dans lequel chaque ouverture (20) est formée par une partie découpée et déformée (21) d'une première ailette (15).

9. Echangeur thermique selon l'une quelconque des revendications 4 à 8, dans lequel la hauteur, mesurée radialement par rapport à l'axe (A), de l'une des premières ailettes (31) est plus grande que la hauteur de l'autre première ailette (30).

10. Echangeur thermique selon l'une quelconque des revendications 4 à 9, dans lequel l'élément allongé creux (4) comprend deux secondes ailettes longitudinales se faisant face (16) dirigées vers l'intérieur de l'hélice (5).

11. Echangeur thermique selon la revendication 10, dans lequel les secondes ailettes (16) sont positionnées de manière à entrer en contact l'une avec l'autre le long d'au moins deux spires adjacentes (12) sur des côtés opposés de la première sortie (23).

12. Echangeur thermique selon l'une quelconque des revendications précédentes, dans lequel le carter (3) comprend une première paroi d'extrémité (8) et une seconde paroi d'extrémité (9) ; la première région d'alimentation en émanations de combustion (11) étant située à proximité de la première paroi d'extrémité (8) ; et la première paroi d'extrémité (8) supporte de préférence un brûleur à gaz (10) logé à l'intérieur de l'hélice (5) et définissant la première région d'alimentation en émanations de combustion (11).

13. Echangeur thermique selon la revendication 12, dans lequel la première sortie (23) est située à proximité de la seconde paroi d'extrémité (9).

14. Echangeur thermique selon la revendication 13, et comprenant une seconde région d'alimentation en émanations de combustion (26) située à proximité de la seconde paroi d'extrémité (9) ; la première sortie (23) étant située entre les première et seconde régions d'alimentation en émanations de combustion (11, 26).
